# EUROPEAN PATENT SPECIFICATION

(11) **EP 0 870 593 B1**
(45) Date of publication and mention of the grant of the patent: **02.10.2002**
(21) Application number: 97933044.6
(22) Date of filing: 29.07.1997
(51) Int. Cl.: B29C 49/06, B29C 49/48, B29C 45/26

(54) **METHOD FOR INJECTION AND STRETCH BLOW MOLDING ARTICLES**
VERFAHREN ZUM SPRITZGIESSEN UND STRECKBLASFORMEN VON GEGENSTÄNDEN
PROCEDE DE MOULAGE PAR INJECTION ET ETIRAGE-SOUFFLAGE

(30) Priority: 31.07.1996 JP 20245996
(43) Date of publication of application: 14.10.1998
(73) Proprietor: A.K. Technical Laboratory, Inc.,, Hanishina-gun, Nagano-ken 389-06 (JP)
(72) Inventor: YAMAGUCHI, Hisao, Nagano-ken 384 (JP)
(74) Representative: Glawe, Delfs, Moll & Partner
(86) International application number: JP9702607
(87) International publication number: WO98004396

(56) References cited:
- EP-A- 0 035 035
- EP-A- 0 498 123
- JP-A- 5 050 430
- JP-A- 8 281 782
- JP-A- 63 114 604
- JP-B- 47 038 548
- US-A- 3 881 854
- US-A- 4 834 638
- PATENT ABSTRACTS OF JAPAN vol. 010, no. 100 (M-470), 16 April 1986 & JP 60 234814 A (OLYMPUS KOGAKU KOGYO KK), 21 November 1985

## Description

### TECHNICAL FIELD

The present invention relates to a method for producing hollow articles including lamp globes and packaging containers by means of stretch blow molding a preform that is injection molded from a synthetic resin such as polyethylene terephthalate, polycarbonate, and the like.

### BACKGROUND ART

Packaging containers including PET bottles are well-known hollow articles produced by means of stretch blow molding. The stretch blow molding is a technique that an injection molded preform is stretched in an axial direction while simultaneously expanding it into bottles of various shapes by blowing air in a blow mold.

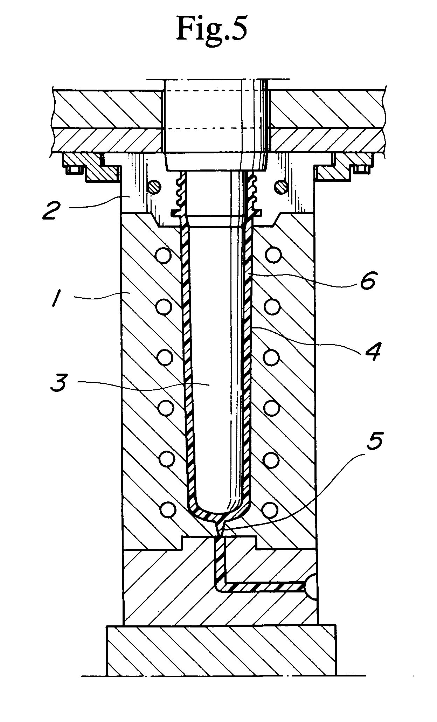

Fig. 5 shows an injection mold that is used to mold preforms for the subsequent stretch blow molding. The injection mold comprises a cavity mold 1 for use in forming a preform body, a neck mold 2 for use in forming a mouth of the preform, and a core mold 3 which passes through the neck mold 2 into the cavity mold 1. These components when combined together form a cavity 4 that extends into the neck mold 2. A molten resin is injected into the cavity 4 through a gate 5 in the bottom of the cavity mold and is filled therein to form a predetermined preform 6.

The preforms obtained by such conventional means have a gate mark on the outer surface of the bottom of the bottle because the molten resin is injected and filled through the gate 5 in the bottom of the cavity mold. The gate mark remains on the bottom of a final product when the preform is stretch blow molded into the product. In most cases, the gate mark is located at a concave portion of the outer surface of the bottom and is unnoticeable from outside when the final product is held vertically. The gate mark is thus of little significance for PET bottles for water and carbonated beverages or the like, in which the container does not need to have any higher level additional value depending on the kind of the content.

However, the gate mark on the bottom may reduce the additional value of the container when it is used for accommodating expensive products such as cosmetics. Especially, displacement of the gate mark, if any, may often prove fatal to the container and make it a defective product. Therefore, a yield is a concern for the molding of the containers adapted to containing expensive products.

When a lamp globe is molded by means of the stretch blow molding, the gate mark on the preform is located at the center of a spherical surface. The gate mark cannot be eliminated completely even when it is post-treatable. For the lamp globes for interior use with the spherical surface facing down, treatment of the gate mark results in fine irregularity on the surface and deteriorates transmittance at that portion due to diffused reflection of light, shadowing partially the lamp globe. In addition, the gate mark tends to be visible on the surface due to difference in surface luminance after the treatment. Thus, there is also a problem that the globes for both illumination and decoration purposes are considered less valuable than those made of glass.

The problem of the gate mark on the bottom of the preform can be solved by means of providing the gate at a position corresponding to the neck of the preform, as disclosed in Japanese Patent Publication JP 47 038548B.

In this known method, however, a nozzle touching section is provided on a parting face of a pair of neck molds. Thus the neck molds are pushed aside and opened due to the injection pressure, which causes necessity of exclusive mold clamping means for the neck molds. Such clamping means, which are not present in conventional systems, causes a further problem of complicating a molding machine.

For the molding, since the molten resin is injected at a single location on the side, the resin hardly flows uniformly to complete filling and the injection tends to cause a welding line. Accordingly, an advanced molding technique is required to mold a uniform preform. It is therefore difficult to solve the problem of the gate mark by means of the above-mentioned known methods.

The present invention is directed to provide a novel method for injection stretch blow molding hollow articles that solves the problems in the above-mentioned known methods and that can prevent a trouble caused during use due to the gate mark on the outer bottom surface thereof as well as prevent reduction of additional value, even though it is a method of injection molding preforms having no gate mark on the bottom surface thereof by means of providing the gate at a position corresponding to the neck of the preform to stretch blow mold the preform, as in the above-mentioned known method.

### DISCLOSURE OF THE INVENTION

The present invention is to achieve the above-mentioned object by means of a method for stretch blow molding a hollow article according to the features of claim 1. This method comprises the steps of closing a cavity mold being for use in molding a body of the preform and a neck mold being for use in molding a mouth of the preform, inserting a core mold into the cavity through the neck mold to form a cavity that reaches inside of the neck mold, injecting a molten resin from a circular resin reservoir to the cavity to injection mold the preform having no gate mark on the outer bottom surface thereof, said circular resin reservoir having a desired outer diameter to form a gate at a parting section between said cavity mold and neck mold around the cavity, said gate being communicated with an injection path formed in the parting between the cavity mold and the neck mold; and stretch blow molding the preform into a hollow article of which the outer bottom surface has no gate mark and requires no post-treatment while holding the mouth of the preform by means of the neck mold.

Furthermore, the present invention is to stretch blow, in a blow mold for lamp globes, the preform obtained by means of injecting the molten resin from the above-mentioned resin reservoir into the cavity while forming the gate mark on a flange portion by the above-mentioned resin reservoir to mold it into a lamp globe of which the outer bottom surface has no gate mark and requires no post-treatment which otherwise may cause optical defect at the center of an luminous portion of said globe. The above-mentioned flange portion is integrally formed with the luminous portion as a flange for fixing the lamp globe.

In addition, the present invention is to stretch blow mold, in a blow mold for containers, the preform obtained by means of injecting the molten resin from the above-mentioned resin reservoir into the cavity while forming the gate mark on a flange portion by the above-mentioned resin reservoir to mold it into a container of which the outer bottom surface has no gate mark and requires no post-treatment. The above-mentioned flange portion is integrally formed with the body as a flange for receiving a cap.

Another feature of the present invention is that the material for molding the above-mentioned lamp globe is a thermoplastic resin having heat resistance such as polycarbonate or the like, and that the material for molding the above-mentioned container is a thermoplastic resin such as polyester resin and polycarbonate or the like.

### BRIEF DESCRIPTION OF DRAWINGS

Fig. 1 is a vertical sectional view of an injection mold illustrating how a preform is injection molded according to the present invention. Fig. 2 is a vertical sectional view of a blow mold illustrating how a spherical globe is stretch blow molded. Fig. 3 is a vertical sectional view of a spherical globe molded according to the present invention. Fig. 4 is a vertical sectional view of a blow mold illustrating how a packaging container is stretch blow molded according to the present invention. Fig. 5 is a vertical sectional view of an injection mold illustrating how a preform for a conventional container such as a PET bottle is injection molded.

### BEST MODE FOR CARRYING OUT THE INVENTION

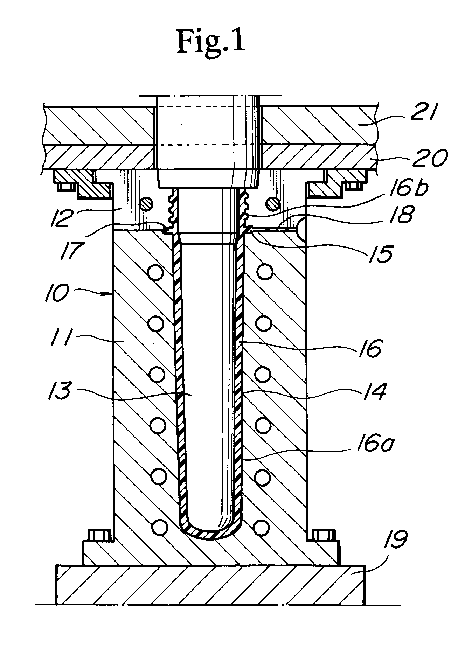

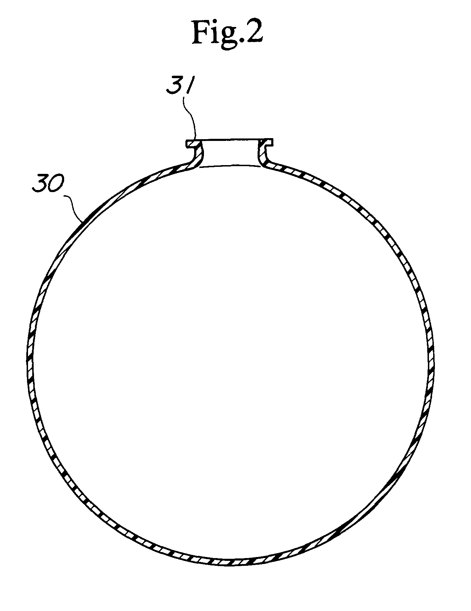

Figs. 1 through 3 shows an embodiment of a case where a lamp globe is molded according to the present invention.

In Fig. 1, reference numeral 10 represents an injection mold for use in molding a preform. The injection mold comprises a cavity mold 11 for use in forming a preform body, a neck mold 12 for use in forming a mouth of the preform, and a core mold 13 which passes through the neck mold 12 into the cavity mold 11. The core mold 13 forms a lengthwise cavity 14 that reaches the inside of the neck mold 12.

A gate 15 for use in injecting a molten resin into the above-mentioned cavity 14 is provided at a parting section between the cavity mold 11 and the neck mold 12 around the cavity 14. A circular resin reservoir 17 having a desired outer diameter is formed at the parting section. The above-mentioned gate 15 is provided in the resin reservoir 17. The gate 15 is communicated with an injection passage 18 provided at the parting between the cavity mold 11 and the neck mold 12.

Reference numeral 19 represents a base plate on which the cavity mold 11 is mounted. Reference numeral 20 represents a transfer plate composed of, for example, a rotary plate having a back surface where the neck mold 12 is mounted such that it can be opened and closed in the horizontal direction. The transfer plate moves upward and downward relative to the cavity mold 11 together with an elevator plate 21 provided above the transfer plate to open and close the mold. While not illustrated in the figure, the core mold 13 is connected to a clamping machine that is provided above the elevator plate 21. Operation of the clamping machine forces the core mold to be inserted into the central portion of the cavity mold 11 through the transfer plate 20, the elevator plate 21, and the neck mold 12 after the mold is closed.

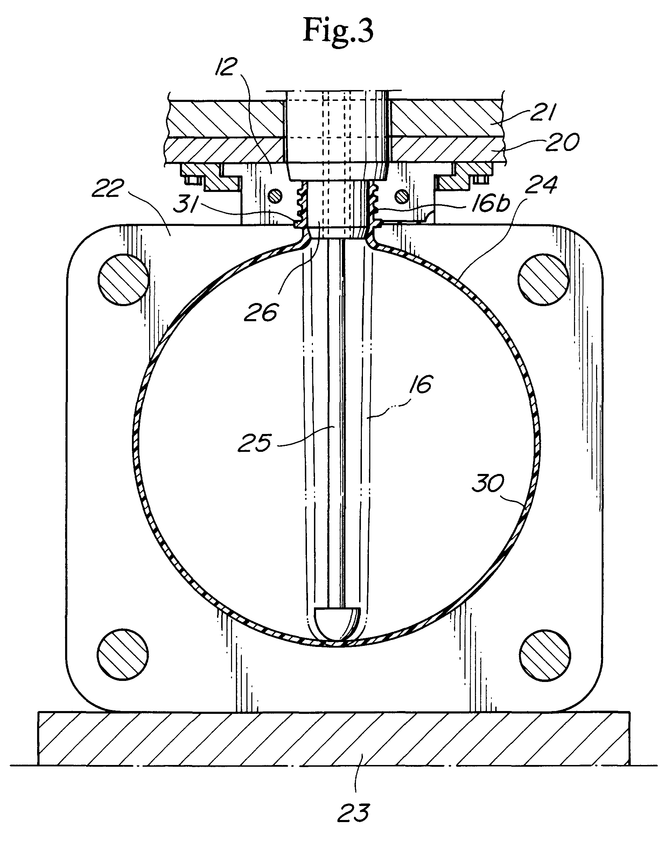

In Fig. 3, reference numeral 22 represents a blow mold formed of a pair of mold halves that travels on a base plate 23 in the direction close to and away from each other. When the blow mold is closed, a blow cavity 24 is formed that is used to form a lamp globe 30 having a spherical body. A blow core 26 through which a stretching rod 25 is passed contractibly is provided at an upper portion such that it can move upward and downward.

While not illustrated in the figure, the above-mentioned globe 30 is molded in the following manner. First, the injection mold 10 is closed and an injection machine is nozzle-touched to the gate of the injection passage at the parting. An opaque-colored molten polycarbonate resin is injected into the mold. An injection pressure is received by a clamping force which is applied in a vertical direction. The injection passage 18 provided at the parting between the cavity mold 11 and the neck mold 12 relieves an urging force against the side of the neck mold that is generated by the injection pressure. Therefore, no clamping means is required to prevent forced opening of the neck mold 12 in a horizontal direction.

The molten resin in the above-mentioned resin passage 18 flows into the resin reservoir 17 through the gate 15. It flows into the cavity 14 from the periphery thereof while being guided by the resin reservoir 17 and flown in a ring-shaped flow. Thus the molten resin uniformly flows without turbulence simultaneously into the cavity on both sides of the cavity mold 11 and the neck mold 12 even when the position of the gate is only one. Thereby the cavity mold 11 forms a body 16a, a mouth 16b having a threaded outer surface is formed by the neck mold 12, and a preform 16 is formed while having a flange 31 formed by the resin reservoir 17 on the periphery of the mouth.

The preform 16 as described above has no welding lines because of uniform injection of the molten resin from the periphery of the cavity which welding lines otherwise tend to be generated when the molten resin is injected through a single portion on the side. This in turn prevents non-uniform section of a final product which otherwise may be caused due to the weld.

Next, the neck mold 12 and the core mold 13 are moved upward to open the mold. The preform 16 is released from the cavity mold 11 and the core mold 13 and is transferred to the above-mentioned blow mold 22 while the mouth 16b being held by the neck mold 12. Then the spherical globe 30 is stretch blow molded by means of an ordinary technique. For the molding, after the mold halves are closed the body 16a of the preform 16 is stretched in the axial direction by the stretching rod 25 and is expanded by blowing air fully in the blow cavity to form the spherical globe 30.

The mold is opened after molding and the lamp globe is transferred to other location with the mouth being held by the neck mold 12. A part of the mouth 16b above the flange 31 is removed as a post-treatment. In such globe 30, the gate mark is present at the outer edge of the flange 31 after sprue formed by the injection passage 18 is removed. Therefore, it is not necessary to treat the gate mark at the center of the body, which is required conventionally. The gate mark, if present, does not deteriorate the appearance because it is at a portion other than the luminous portion.

The mouth 16b may not be removed. Instead, the thread in the outer surface of the mouth may be used to threadedly fix the lamp globe to a lamp socket. When the mouth 16b is removed, the flange 31 is used as a flange to fix the lamp globe.

As described above, there is no shadow at the center of the lamp globe due to the gate mark. The gate mark is not visible on the surface which otherwise may be visible due to difference in surface luminance after the treatment. Accordingly, the lamp globes made of a synthetic resin such as polycarbonate are of comparable quality to those made of glass. The value of the lamp globes for illumination and decoration purpose is improved significantly. In addition, it is possible to decrease a price because they can be mass-produced by using stretch blow molding.

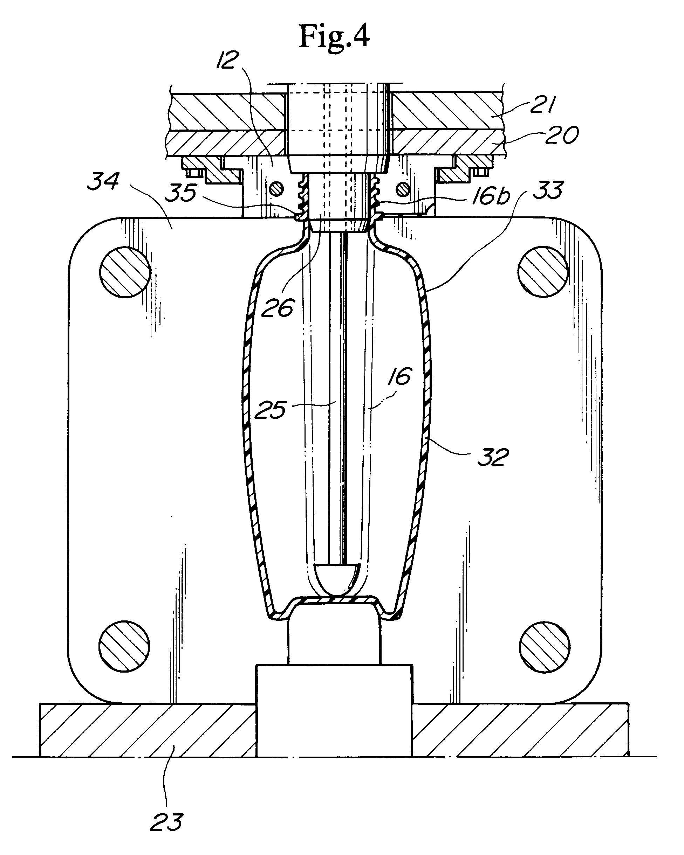

Fig. 4 shows an embodiment of a container 32 having no gate mark at the center of the outer bottom surface. The container 32 is formed as in the case of the lamp globe 30 by means of molding the preform 16 and stretch blowing the preform 16 into the container 32 in a blow mold 34 having a cavity 33 to form a lengthwise container.

In this container 32, the preform 16 is stretch blow molded in the blow mold 34 that the preform is formed by means of injecting a molten polyethylene terephthalate resin into the cavity 14 through the gate 15 of the resin reservoir 17 at the parting section of the cavity 14 of the above-mentioned injection mold 10. Therefore, the gate mark is generated at a flange portion 35 by the above-mentioned resin reservoir 17. As a result, there is provided the gateless container 32 of which the outer bottom surface has no gate mark and requires no post-treatment of the outer bottom surface thereof. In the container 32 described above, the flange 35 formed by the resin reservoir 17 may be integrally formed with the body as a flange for receiving a cap.

The center of the preform 16 is displaced out of the center of the end of the stretching rod 25 when the rate of stretching in the vertical direction by the stretching rod 25 is larger than the rate of expansion in the radial direction by blowing air even though the difference between them is quite small. This results in displacement of the gate mark out of the center of the outer bottom surface in the conventional container having the gate mark on the bottom, deteriorating the appearance of it. The container may be discarded as a defect product for containing a product, such as cosmetics, having a higher level additional value. No such a problem occurs for the container 32 having the gateless outer bottom surface. This eliminates defect products due to displacement of the gate mark, increasing the yield.

While the above-mentioned embodiments have thus been described in conjunction with the case where the injection mold 10 is formed of the lower cavity mold 11 and the upper neck mold 12, the injection mold 10 may be formed of them with their position reversed. In such a case, the cavity mold 11 may be extended down to be fixed to the upper base plate. The neck mold 12 is provided together with transfer means in such a manner that the neck mold is movable upward and downward relative to the back surface of the cavity mold.

### INDUSTRIAL APPLICABILITY

As described above, a gate is provided in the circular resin reservoir having a desired outer diameter that is formed at the parting section of the cavity to injection mold a preform having no gate mark on the outer bottom surface, which is then stretch blown into the hollow article having no gate mark on the outer bottom surface. For the lamp globes, the optical defect can be eliminated which otherwise is caused due to the gate mark. For the containers, it is possible to prevent reduction of the additional value which otherwise is caused due to the gate mark on the outer bottom surface. Application of it is advantageous in the industrial field. In addition, no significant modification is made on the injection mold and the blow mold as compared with those having a conventional structure. No special technique is required for the molding. Accordingly, the present invention has a significant industrial applicability.

## Claims

1. A method for injection stretch blow molding a hollow article (30) by means of injecting, to form a desired preform (16), a molten resin into an injection mold (10) in which a cavity mold (11) being for use in molding a body (16a) of the preform and a neck mold (12) being for use in molding a mouth (16b) of the preform are closed, and in which a cavity (14) is formed by passing a core mold (13) through the neck mold (12), and stretch blow molding the preform (16) in a blow mold (22) into a hollow article (30), **characterized by** injecting a molten resin from a circular resin reservoir (17) to the cavity (14) to injection mold the preform (16) having no gate mark on the outer bottom surface thereof, said circular resin reservoir (17) having a desired outer diameter to form a gate (15) at a parting section between said cavity mold (11) and neck mold (12) around the cavity, said gate (15) being communicated with an injection passage (18) formed in the parting between the cavity mold (11) and the neck mold (12); and stretch blow molding the preform (16) in the blow mold (22) into a hollow article (30) of which the outer bottom surface has no gate mark and requires no post-treatment while holding the mouth of the preform by means of the neck mold.

2. A method for injection stretch blow molding as claimed in Claim 1, **characterized by** stretch blowing the preform (16) in a blow mold (22) for lamp globes (30), the preform (16) being obtained by means of injecting the molten resin from said resin reservoir (17) into the cavity (14) and forming the gate mark on a flange portion formed by said resin reservoir (17), and blow molding the preform into a lamp globe (30) the gate mark of which requires no post-treatment which otherwise causes optical defect at the center of a luminous portion of said globe.

3. A method for injection stretch blow molding as claimed in Claim 2, **characterized in that** said flange portion is integrally formed with the luminous portion as a flange for fixing the lamp globe (30).

4. A method for injection stretch blow molding as claimed in Claim 2, **characterized in that** said lamp globe (30) is made of a thermoplastic resin having heat resistance such as polycarbonate.

5. A method for injection stretch blow molding as claimed in Claim 1, **characterized by** stretch blowing the preform, in a blow mold (34) for containers (32), the preform being obtained by means of injecting the molten resin from said resin reservoir (17) into the cavity (14) and forming the gate mark on a flange portion formed by said resin reservoir (17), and blow moulding the preform into a gateless container (32) the outer bottom surface of which has no gate mark and requires no post-treatment.

6. A method for injection stretch blow molding as claimed in Claim 5, **characterized in that** said container (32) is made of a thermoplastic resin such as polyester resin and polycarbonate.

7. A method for injection stretch blow molding as claimed in Claim 5, **characterized in that** said flange portion is integrally formed with the body as a flange for receiving a cap.

## Patentansprüche

1. Verfahren zum Spritzgieß-Blasstreckformen eines hohlen Werkstücks (30) durch Spritzgießen eines geschmolzenen Kunstharzes zur Bildung eines gewünschten Vorformlings (60) in einer Spritzgießform (10), in der eine Hohlraumform (11) zum Formen des Körpers (16a) des Vorformlings und eine Halsform (12) zum Formen einer Mündung (16b) des Vorformlings geschlossen sind und in der eine Formkavität (14) gebildet wird durch Einführen eines Formkerns (13) durch die Halsform (12), und durch Blasstreckformen des Vorformlings (16) in einer Blasform (22) zu einem hohlen Werkstück (30)
**gekennzeichnet durch** Spritzgießen von geschmolzenem Kunstharz aus einem kreisförmigen Harzreservoir (17) in der Formkavität (14) zum Spritzgießen des Vorformlings (16) ohne Bildung einer Eintrittsmarke an dessen äußerer Bodenfläche, wobei das kreisförmige Harzreservoir (17) einen gewünschten Außendurchmesser hat um einen Einlaß (15) an einer Trennfuge zwischen der Hohlkörperform (11) und der Halsform (12) um die Formkavität herum zu bilden, wobei der Einlaß (15) mit einem Einspritzkanal (18) kommuniziert, der in der Trennfuge zwischen der Hohlraumform (11) und der Halsform (12) gebildet ist, und Blasstreckformen des Vorformlings (16) in der Blasform (22) zu einem hohlen Werkstück (30), dessen äußere Bodenfläche keine Eintrittsmarke hat und keine Nachbehandlung erfordert, während die Mündung des Vorformlings mittels der Halsform festgehalten wird.

2. Verfahren zum Spritzgieß-Blasstreckformen nach Anspruch 1,
**gekennzeichnet durch** Streckblasen des Vorformlings (16) in einer Blasform (22) für Lampenkugeln (30), wobei der Vorformling (16) erhalten wird **durch** Einspritzen des geschmolzenen Harzes aus dem Harzreservoir (17) in die Formkavität (14) und Bilden der Eintrittsmarke an einem Flanschteil, der **durch** das Harzreservoir (17) geformt wird, und Blasformen des Vorformlings zu einer Lampenkugel (30), dessen Eintrittsmarke keine Nachbehandlung erfordert, die sonst einen optischen Fehler im Mittelpunkt des Leuchtbereiches der Kugel verursachen würde.

3. Verfahren zum Spritzgieß-Blasstreckformen nach Anspruch 2,
**dadurch gekennzeichnet, daß** der Flanschteil einstückig mit dem Leuchtbereich geformt ist als ein Flansch zum Befestigen der Lampenkugel (30).

4. Verfahren zum Spritzgieß-Streckblasformen nach Anspruch 2,
**dadurch gekennzeichnet, daß** die Lampenkugel (30) aus einem thermoplastischen Harz mit großer Wärmebeständigkeit, wie z.B. Polykarbonat, hergestellt wird.

5. Verfahren zum Spritzgieß-Blasstreckformen nach Anspruch 1,
**gekennzeichnet durch** Streckblasen des Vorformlings in einer Blasform (34) für Behälter (32), wobei der Vorformling erhalten wird mittels Einspritzen des geschmolzenen Harzes aus dem Harzreservoir (50) in die Formkavität (14) und Bilden der Einlaßmarke an einem Flanschteil, der **durch** das Harzreservoir (17) gebildet wird, und Blasformen des Vorformlings in einen Behälter (32) ohne Eintrittsmarke, dessen äußere Bodenfläche keine Eintrittsmarke hat und keine Nachbehandlung erfordert.

6. Verfahren zum Spritzgieß-Blasstreckformen nach Anspruch 5,
**dadurch gekennzeichnet, daß** der Behälter (32) aus einem thermoplastischen Harz wie Polyesterharz und Polycarbonat hergestellt wird.

7. Verfahren zum Spritzgieß-Blasstreckformen nach Anspruch 5,
**dadurch gekennzeichnet, daß** der Flanschteil einstückig an dem Körper angeformt ist als ein Flansch zur Aufnahme eines Deckels.

## Revendications

1. Procédé pour mouler par étirage-soufflage par injection d'un article creux (30) au moyen de l'injection, pour former une préforme désirée (16), d'une résine fondue dans un moule d'injection (10) dans lequel un moule de cavité (11) prévu pour utilisation dans le moulage d'un corps (16a) de la préforme et un moule de col (12) prévu pour utilisation dans le moulage d'une embouchure (16b) de la préforme sont fermés, et dans lequel une cavité (14) est formée en passant un moule de coeur (13) à travers le moule de col (12), et mouler par étirage-soufflage la préforme (16) dans un moule de soufflage (22) en un article creux (30), **caractérisé par** les étapes consistant à injecter une résine fondue depuis un réservoir de résine circulaire (17) dans la cavité (14) pour mouler par injection la préforme (16) n'ayant aucune empreinte d'entrée sur sa surface de fond extérieure, ledit réservoir de résine circulaire (17) ayant un diamètre externe désiré pour former une entrée (15) au niveau d'une section de séparation entre ledit moule de cavité (11) et le moule de col (12) autour de la cavité, ladite entrée (15) étant mise en communication avec un passage d'injection (18) formé en la séparation entre le moule de cavité (11) et le moule de col (12), et mouler par étirage-soufflage la préforme (16) dans le moule de soufflage (22) en un article creux (30) dont la surface de fond externe n'a pas d'empreinte d'entrée et ne requiert pas de post-traitement tout en maintenant l'embouchure de la préforme au moyen du moule de col.

2. Procédé de moulage par étirage-soufflage par injection selon la revendication 1, **caractérisé par** les étapes consistant à souffler-étirer la préforme (16), dans un moule de soufflage (22) pour des globes de lampe (30), la préforme (16) étant obtenue au moyen de l'injection de la résine fondue depuis ledit réservoir de résine (17) dans la cavité (14) et former l'empreinte d'entrée sur une partie de collerette formée par ledit réservoir de résine (17), et mouler par soufflage la préforme en un globe de lampe (30) dont l'empreinte d'entrée ne requiert pas de post-traitement qui, sinon, provoquerait un défaut optique au niveau du centre d'une partie lumineuse dudit globe.

3. Procédé de moulage par étirage-soufflage par injection selon la revendication 2, **caractérisé en ce que** ladite partie de collerette est formée solidairement avec la partie lumineuse comme une collerette pour fixer le globe de lampe (30).

4. Procédé de moulage par étirage-soufflage par injection selon la revendication 2, **caractérisé en ce que** ledit globe de lampe (30) est fabriqué à partir d'une résine thermoplastique ayant une résistance à la chaleur telle que le polycarbonate.

5. Procédé de moulage par étirage-soufflage par injection selon la revendication 1, **caractérisé par** les étapes consistant à étirer-souffler la préforme dans un moule de soufflage (34) pour des containers (32), la préforme étant obtenue au moyen de l'injection de résine fondue depuis ledit réservoir de résine (17) dans la cavité (14), et former l'empreinte d'entrée sur une partie de collerette formée par ledit réservoir de résine (17), et mouler par soufflage la préforme en un container sans entrée (32) dont la surface de fond externe ne présente pas d'empreinte d'entrée et ne requiert pas de post-traitement.

6. Procédé de moulage par étirage-soufflage par injection selon la revendication 5, **caractérisé en ce que** ledit container (32) est fabriqué à partir d'une résine thermoplastique telle qu'une résine polyester et le polycarbonate.

7. Procédé de moulage par étirage-soufflage par injection selon la revendication 5, **caractérisé en ce que** ladite partie de collerette est formée solidairement avec le corps comme une collerette pour recevoir un capuchon.
